# EUROPÄISCHE PATENTSCHRIFT

(11) **EP 2 742 237 B1**
(45) Veröffentlichungstag und Bekanntmachung des Hinweises auf die Patenterteilung: **13.05.2015**
(21) Anmeldenummer: 12766867.1
(22) Anmeldetag: 09.08.2012
(51) Int. Cl.: F03D 11/00, F16N 31/00

(54) **AUFFANGVORRICHTUNG SOWIE VERFAHREN DAMIT**
COLLECTING APPARATUS AND METHOD USING THE SAME
DISPOSITIF DE COLLECTE ET PROCÉDÉ ASSOCIÉ

(30) Priorität: 09.08.2011 DE 102011052506
(43) Veröffentlichungstag der Anmeldung: 18.06.2014
(73) Patentinhaber: Schröder, Christian, 21698 Harsefeld (DE)
(72) Erfinder: Schröder, Christian, 21698 Harsefeld (DE)
(74) Vertreter: Hansen, Jochen
(86) Internationale Anmeldenummer: PCT/DE2012/100234
(87) Internationale Veröffentlichungsnummer: WO 2013/020553

(56) Entgegenhaltungen:
- WO-A1-2011/064002
- GB-A- 2 337 690
- GB-A- 2 428 032
- US-A1- 2010 124 507

## Beschreibung

Die Erfindung betrifft eine Auffangvorrichtung für an Türmen, Pfeilern oder dergleichen, insbesondere für Windkraftanlagen, abtropfenden, umweltschädlichen Flüssigkeiten, insbesondere Öl, wobei wenigstens eine vollständig um den Turm umlaufende Manschette, die flüssigkeitsdicht am Turm anschließt, und ein daran befestigtes Auffangmittel vorgesehen sind sowie im Auffangmittel Bindemittel für umweltschädliche Flüssigkeiten, insbesondere Ölbindemittel, angeordnet sind. Ferner betrifft die Erfindung ein Verfahren damit.

Heutige Windkräftanlagen mit horizontaler Rotationsachse weisen eine auf einem Turm um eine vertikale Achse drehbar angeordnete Generatorgondel auf, in der die zur Umwandlung der mechanischen Drehbewegung in elektrische Leistung erforderlichen Anlagen untergebracht ist. In Lagern, teils in Generatoren und in einem Getriebe sind dabei Schmieröle und -fette sowie ggf. Kühlflüssigkeiten, Hydrauliköle und Bremsflüssigkeiten erforderlich. Beim Erreichen von Verschleißgrenzen, bei Überbeanspruchung oder bei Fehlern können diese umweltschädlichen Flüssigkeiten austreten und am Turm abtropfen. Die zwischen Generatorgondel und Turm abtropfenden Öle verursachen neben der Verunreinigung des Turmes und des Fundaments auch erhebliche Umweltschäden im umgebenden Erdreich. Ein Getriebe für eine große Windkraftanlage kann dabei zwischen 200 bis 600 Liter Getriebeöl enthalten. Entsprechend groß sind die möglichen Schäden. Ferner ist nach Feststellung eines solchen Schadens möglicherweise das umgebende Erdreich auszutauschen sowie der vollständige Turm abzureinigen, was neben der Stillstandzeit der Windkraftanlagen einen darüberhinausgehenden weiteren erheblichen wirtschaftlichen Schaden bedeutet.

Eine Auffangvorrichtung nach dem Oberbegriff ist aus der US 2010/0124507 A1 bekannt. Eine ähnliche Vorrichtung zeigt die DE 10 2005 032 627 B3. Bei beiden Auffangvorrichtungen werden Öle zwar mit einer rinnenartigen Vorrichtung gesammelt, dann jedoch über Durchgangsöffnungen in das Innere des Turmes geführt und über ein entsprechendes Fallrohr im Innern des Turms zum Boden zu einem Ölabscheider geleitet. Ferner zeigt die US 2010/0124507 A1 in einer Ausführungsform die Möglichkeit, dass aus einem Ölabscheider austretende Wasser direkt außerhalb des Turms an die Umgebung abgeben zu können. Es besteht jedoch ein erheblicher Aufwand zur Handhabung und Austausch des im Ölabscheider vorgehaltenen Absorptionsmittel.

Aus der GB 2 337 690 A ist eine Bindemittelmatte aus einem aufsaugenden Gummimaterial bekannt, mit dem Öl und andere Verunreinigungen an Land oder auf See aufgesaugt werden können. Dabei ist das Mattenmaterial durch vernähte Fäden in Art eines Netzes verstärkt. Darin ist auch eine Filterfunktion dieser Matten bei Beaufschlagung von verunreinigtem Wasser beschrieben, wobei das verunreinigte Wasser durch einen Mattenstapel geleitet wird und unterhalb des Mattenstapels das von der Verschmutzung (Öl) gereinigte Wasser ablaufen kann.

Aufgabe der Erfindung ist es daher eine Auffangvorrichtung sowie ein Verfahren dafür anzugeben, bei dem eine einfache Handhabung gewährleistet ist.

Gelöst wird diese Aufgabe mit einer Auffangvorrichtung gemäß Anspruch 1. Mit einer vollständig um den Turm umlaufenden Manschette, die flüssigkeitsdicht am Turm anschließt, beispielsweise mit einem den Turm umlaufenden Spannband, wird das an der Außenseite des Turmes abfließende bzw. abtropfende Öl oder dergleichen von der Turmaußenfläche abgenommen und in einem daran stromabwärtig anschließenden Auffangmittel geleitet. Mit dem Spannband wird jeglicher Eingriff in die Struktur des Turmes vermieden. Um die aufgefangene umweltschädliche Flüssigkeit möglichst rasch zu binden und sie auch handhabbar zu machen, ist im Auffangmittel Ölbindemittel angeordnet. Um Oberflächenwasser, das beispielsweise bei Nierderschlägen von der Generatorgondel abtropft und/oder am Turm abfließt, von dem im Bindemittel gebundenen Öl zu trennen, sind Öffnungen unterhalb des Bindemittels des Auffangmittels vorgesehen. Die Öffnungen sind dabei so ausgestaltet, dass das Bindemittel dort nicht durchdringen kann. Dabei ist das Bindemittel in Form von Bindemittelmatten als in das Auffangmittel einlegbare Kassetten ausgebildet. Als Ölbindematte eignen sich beispielsweise Produkte unter den Markennamen "ambratec" oder "DEUREX Pure". Ferner ist die Kassette ein standardisiertes Kreisringsegment mit einem unteren Lochblechabschnitt unter der Bindemittelmatte und einem oberen Lochblechabschnitt über der Bindemittelmatte, wobei die Bindemittelmatte Übermaß über die Lochblechabschnitte und Breite der umlaufenden kreisringförmigen Rinne hat, da damit auch die mit Öl befrachteten Bindemittelmatten in ihrer Lage innerhalb der kreisringförmigen Rinne sicher fixiert sind.

Wenn das Auffangmittel eine um den Turm umlaufende kreisringförmige Rinne ist, kann über die kreisringförmige Rinne für die gesamte Umfangslinie die umweltschädliche Flüssigkeit in diesem Volumen aufgenommen werden.

Das Ölbindemittel kann ein Granulat und eine Bindemittelmatte sein. Wenn in der Auffangrinne zunächst oben die Bindemittelmatte angeordnet ist, die im Wesentlichen auftretendes Öl sowie sonstige umweltschädliche Flüssigkeiten bindet, kann im unteren Teil der Auffangrinne noch zusätzlich Ölbindemittel in Form von Granulat eingestreut sein, um ein redundantes System den Bindemittelmatten nachzuschalten, falls an den Bindemittelmatten aufgrund eines Schadens oder einer nicht richtigen Lage Öl doch noch vorbeitreten sollte. Beispielsweise könnte in der nachgeschalteten Granulatstufe ein Ölsensor angeordnet werden, der bei Feststellung von Öl ein Alarmsignal gibt, sodass dann entsprechende Maßnahmen eingeleitet werden können, ohne dass sofort mit einem Ölaustritt an der Auffangvorrichtung zu rechnen ist.

In weiterer Ausgestaltung sind die Lochblechabschnitte einer Kassette miteinander verbunden und Handgriffe am oberen Lochblechabschnitt vorgesehen, womit ein Austauschen der Kassetten nach einem Havariefall vereinfacht werden. Die Kassetten können an den Handgriffen leicht aus der kreisringförmigen Rinne entnommen werden und beispielsweise über einen Seilzug zum Boden transportiert werden.

Wenn die Auffangvorrichtung aus mehreren, insbesondere zwei, kreissegmentförmigen Teilen besteht, die der Querschnittform des Turms angepasst sind und allein durch umlaufende Verspannung am Turm befestigt sind, kann sie sehr einfach am Fuß des Turmes vormontiert, bis zur gewünschten Montagehöhe angehievt und dort beispielsweise mit umlaufenden Spannbändern am Turm fixiert werden. Neben der kraftschlüssigen Kopplung der Auffangvorrichtung durch die umlaufenden Spannbänder, die beispielsweise am oberen und unteren Ende der Manschette umlaufend aufgelegt und verspannt werden, wobei insbesondere im Bereich des Spannbandes zwischen der Manschette und dem Turm eine dauerelastische, vollständig umlaufende Dichtung vorzusehen ist, kann aufgrund der konischen Form des Turmes auch eine formschlüssige Festlegung der Auffangvorrichtung am Turm wirken. Die Form der Segmente sind selbstverständlich auf die Querschnittsform des Turmes auf Montagehöhe anzupassen. Als Dichtmittel eignen sich beispielsweise Produkte der Marke "Sikaflex-221" oder dichtende Klebebänder der Firma "TITGEMEYER".

Um möglichst wenig Niederschlagswasser in die Auffangvorrichtung zu leiten und gleichzeitig möglichst das gesamte etwaigig abtropfende Öl aufzufangen, ist bei einem Turm für Windkraftanlagen mit Generatorgondel das Gehäuse direkt unterhalb der Generatorgondel angeordnet.

Verfahrensgemäß wir die Aufgabe dadurch gelöst, dass sämtliche am Turm abtropfende Flüssigkeiten, also Öl und Niederschlagwasser mit der Auffangvorrichtung aufgefangen und zu Auffangmitteln geleitet werden, wobei das Öl mit Bindemitteln gebunden wird, wohingegen das Niederschlagwasser unterhalb der Bindemittel durch Öffnungen aus der Auffangvorrichtung abtropfen kann.

Dadurch, dass nach einem Havariefall die in der Auffangvorrichtung angeordneten Bindemittelkasetten mit dem darin aufgenommenen Öl gewechselt werden, kann schnell auf einen Havariefall reagiert werden. Umweltschäden können somit sicher vermieden werden.

Nachfolgend wird ein Ausführungsbeispiel der Erfindung anhand der beiliegenden Zeichnungen beschrieben.

Darin zeigt:

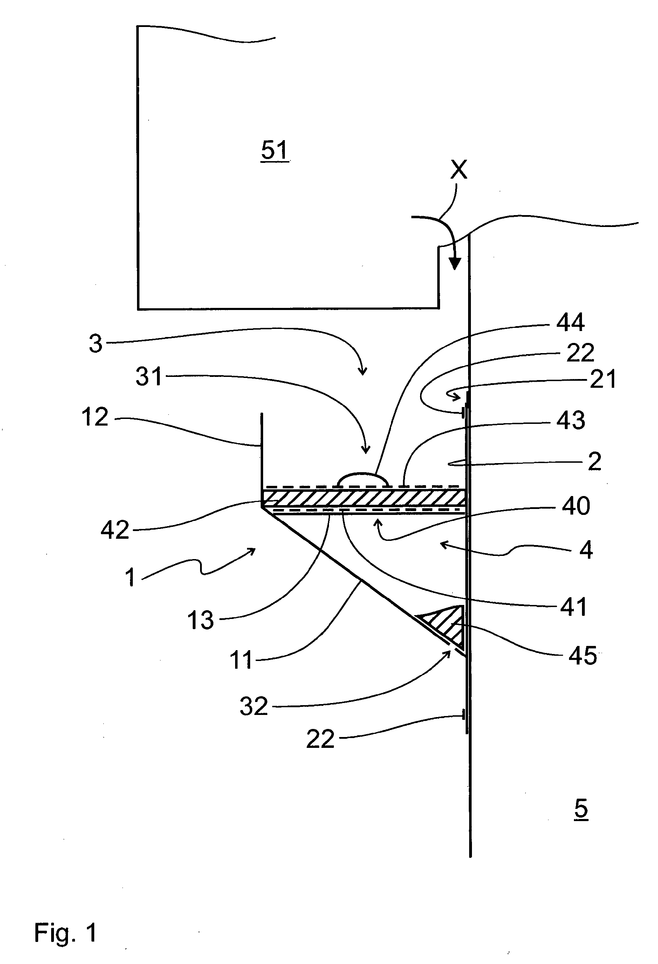

- Fig. 1: eine an einem Turm angeordnete Auffangvorrichtung im Vertikalschnitt.

In Fig. 1 ist ein Turm 5 einer Windkraftanlage mit einer Auffangvorrichtung 1 in einem durch die Mittelachse des Turmes 5 verlaufenden Vertikalschnitt dargestellt. Dabei ist nur eine Seite des Schnittes links von der Mittelachse dargestellt.

Die Windkraftanlage besteht aus einem Turm 5, auf dem eine um eine vertikale Achse drehbar gelagerte Generatorgondel 51 aufgesetzt ist. Die übrigen Teile der Windkraftanlage sind nicht dargestellt. Am Turm 5 nahe der Generatorgondel 51 ist eine erfingungsgemäße Auffangvorrichtung 1 angeordnet. Die Auffangvorrichtung 1 weist eine Manschette 2 auf, die am einen kreisförmigen Querschnitt aufweisenden Turm 5 mit umlaufenden Spannbändern 22, 22 gehalten ist. In der Auffangvorrichtung 1 ist ein Auffangmittel 3 angeordnet. Von der Manschette 2 ist eine umlaufende konische Wandung 11 angeformt, die an ihrem auswärtigen Ende übergeht in eine im Wesentlichen senkrecht orientierte Seitenwand 12. Somit spannt die Auffangvorrichtung zwischen der Manschette 2 und der konischen Wandung 11 beziehungsweise Seitenwand 12 ein Auffangmittel 3 auf, dass eine kreisringförmige Rinne 31 bildet, die vollständig um den Turm 5 der Windkraftanlage herumgeführt ist. Die kreisringförmige Rinne 31 weist umlaufend an ihren tiefsten Punkten Öffnungen 32 auf, die durch eingelegte Gitter oder dergleichen so ausgestaltet sind, dass in der kreisringförmigen Rinne 31 aufgenommenes Ölbindemittel 4, beispielsweise in Form von Granulat 45, nicht durch die Öffnungen 32 gelangen kann. Das in dieser kreisringförmigen Rinne 31 aufgenommene Ölbindemittel 4 lässt Öl nicht, Wasser dagegen durch. Wichtig ist, dass die Auffangvorrichtung das auftretende Niederschlagwasser, das von der Gondel 51 und dem Turm 5 herunterläuft und in die Auffangvorrichtung 1 gelangt, weitestgehend ungehindert durch die Öffnungen 32 wieder abgibt.

Zwischen der Seitenwand 12 beziehungsweise dem äußeren Ende der konischen Wandung 11 und der Manschette 2 ist ein Halteelement 13, beispielsweise ein Metallbügel vorgesehen, der einerseits die aus der konischen Wandung 11 und der Seitenwand 12 gebildete kreisförmige Rinne 31 versteift und andererseits als Auflagepunkte für ein Bindemittel 4 dient.

Das Bindemittel 4 besteht an dieser Stelle aus einer Kassette 40, die ein unteres Lochblech 41, eine darauf gelegte Bindemittelmatte 42 und ein oberes Lochblech 43 aufweist, wobei das untere Lochblech 41 mit dem oberen Lochblech 43 verbunden ist. Die Bindemittelmatte 42 weist ein Übermaß auf, so dass die kreissegmentförmige Kassette 40 beim Einsetzen in die kreisförmige Rinne dichtend an die jeweiligen Wandungen, nämlich außenseitig Seitenwand 12 und innenseitig die Manschette 2 angepresst wird. Ebenso wird der Übergang von einer Kassette 40 zur nächsten Kassette durch einen entsprechenden Presssitz sicher zusammengefügt, so dass kein Öl ungehindert durch die Bindemittelmatte 42 treten kann. Bevorzugt ist an dem oberen Lochblech 43 jeder Kassette 40 ein Handgriff 44 vorgesehen, damit die Kassetten beim Service leicht ausgetauscht werden können. Über die gesamte Umfangslinie sind beispielsweise 12 bis 16 gleichartige Kassetten 40 vorgesehen. Die Kassetten 40 sind so ausgebildet, dass sie mit ihrer leicht überstehenden Bindemittelmatte dicht an die Wandungen des Auffangmittels 3 sowie an die nächste Kassette heranreichen, sodass die in die Auffangvorrichtung 1 hineintropfenden umweltschädlichen Flüssigkeiten (Pfeil X) von dem mattenförmigen Bindemittel aufgenommen werden.

Optional befindet sich im tiefsten Bereich der kreisförmigen Rinne 31 lose eingeschüttetes Bindemittelgranulat 45, dass so ausgewählt ist, dass es nicht durch die Öffnungen 32 rieseln kann. Das zusätzliche Bindemittelgranulat 45 liefert somit eine zu den in den Kassetten 40 vorhandenen Bindemittelmatten 42 redundante, nachgeschaltete Möglichkeit, doch noch hindurchtretendes Öl aufzufangen. Die darunter in der kreisringförmigen Rinne 31 eingebrachte Schüttung von Bindemittel in Form von Granulat 41 dient dann als ergänzendes Redundanzsystem zur Abscheidung der umweltschädlichen Flüssigkeiten.

Wie bereits eingangs erwähnt, wird die Manschette 2 mit vollständig um den Turm 5 umlaufenden Spannbändern 22 an dem Turm festgesetzt. Um ein Überführen der am Turm 5 abtropfenden Flüssigkeit vollständig in die Auffangvorrichtung 1 sicherzustellen, ist ein dauerelastisches Dichtmittel 21 am oberen Ende der Manschette 2 angeordnet, wobei dieses Dichtmittel 21 über das Spannband 22 dichtend verpannt wird. Alternativ oder ergänzend kann die Auffangvorrichtung auch an den Turm 5 angeklebt werden. Eine mechanische Verbindung in den Turm 5 ist aus Sicherheitsgründen jedoch nicht erlaubt.

Nachfolgend wird die Funktionsweise der Erfindung ebenfalls unter Bezug auf die beiliegende Figur 1 beschrieben.

Zunächst werden beispielsweise zwei hatbkreissegmentförmige Teile der Auffangvorrichtung am Fuß des Turmes 5 einseitig miteinander verbunden und dann um den Turm 5 angeordnet, auf die gewünschte Montagehöhe angehievt. Da der Turm leicht konisch nach oben hin zusammenläuft, können die beiden halbkreissegmentförmigen Teile erst bei Erreichen der Montagehöhe beidseitig miteinander verbunden werden. Vor dem Anhieven beziehungsweise vor dem endgültigen Zusammensetzen auf Montagehöhe wird das Dichtmittel 21 vollständig umlaufend innenseitig am oberen Ende der Manschette 2 aufgebracht. Nach Ausrichtung der Auffangvorrichtung 1 auf Montagehöhe wird dann das obere Spannband 22 um die Manschette 2 im Bereich des Dichtmittels 21 gelegt und verspannt. Das Spannband 22 kann beispielsweise ein Edelstahlspannband mit Schraubspannung sein. Am unteren Ende der Manschette 2 wird ein zweites Spannband 22 fixiert. Damit wird das gesamte Auffang-System ohne Eingriff in die Struktur der Anlage am Turm befestigt. Es sind also keine Bohrungen im Turm erforderlich. Nach der ordnungsgemäßen Befestigung der Auffangvorrichtung 1 am Turm 5 liegt die Manschette 2 unter Presssitz mit ihrem Dichtmittel 21 um den Turm 5 umlaufend flüssigkeitsdicht an.

Sollte nun an der Windkraftanlage in der Generatorgondel 51 ein Schaden entstehen und eine umweltschädliche Flüssigkeit (Pfeil X), beispielsweise Öl auslaufen, gelangt dieses Öl durch Abfließen/Abtropfen am Turm 5 in die Auffangvorrichtung 1 und nachfolgend in das Auffangmittel 3. Zunächst tropft die Flüssigkeit auf die Bindemittelmattenkassetten 40, in denen das in der Flüssigkeit enthaltende Öl aufgenommen wird. Anschließend tropft die restliche Flüssigkeit in die kreisringförmige Rinne 31 des Auffangmittels 3 und sammelt sich dort und gelangt zum darin aufgenommenen Ölbindemittelgranulat 45. Zur leichteren Austauschbarkeit kann das Bindemittelgranulat 45 in einem Gewebeschlauch eingefüllt sein, der umlaufend in der Rinne angeordnet wird. Etwaige in der aufgefangenen Flüssigkeit noch enthaltende Öle werden vom Ölbindemittelgranulat 45 aufgenommen und somit vom sonstigen Niederschlagswasser getrennt. Das übrig bleibende Wasser tropft durch die Öffnungen 32 ins Freie. In der Auffangvorrichtung 1 werden somit lediglich die für die Umwelt schädlichen Bestandteile aufgefangen. Etwaiges Niederschlagswasser kann die Vorrichtung passieren.

Zu Wartungszwecken ist dann lediglich in festen Zeitintervallen das Ölbindemittel 4 in der Auffangvorrichtung auszutauschen. Dies ist mit den Kassetten 40 mit geringem Aufwand schnell möglich. Die auszutauschenden Kassetten 40 können ohne jeglichen Montageaufwand von außen entnommen und neu eingelegt werden. Bevorzugt kann der Wechsel unter Einsatz von Seiltechnik also ohne aufwendige Kran- oder Bühneninstallationen erfolgen. Ferner ist bei etwaigen größeren Störfällen und einem entsprechenden Öleintrag das Ölbindemittelgranulat 45, bevorzugt der befüllte Gewebeschlauch, auszutauschen.

Sofern ein Ölsensor beispielsweise im Auffangmittel 3 angeordnet wird, kann bei einem Übersteigen der Ölbindekapazität der Bindemittelkassetten 40 ein Alarm zum baldigen Austausch des Ölbindesmittels 4 in der Auffangvorrichtung 1 abgegeben werden, so dass ein Service-Team diese Arbeit vor Überschreiten der Ölbindekapazität des Bindemittelgranulats 45 ausführen kann.

Ergänzend kann der Freiraum zwischen der Generatorgondel 51, insbesondere bei schmalen Gondeln mit nur geringem Überhang über den Turm, und dem oberen Ende der Seitenwand 12 der Auffangvorrichtung 1 durch einen umlaufenden, elastischen Dichtring oder Vorhang weitestgehend von Umwelteinflüssen abgesperrt werden. Der Dichtvorhang kann beispielsweise auf dem oberen Rand der Seitenwand 12 mit geeigneten Klemmringen öffenbar fixiert werden, um etwaig auszuwechselnde Kassetten 40 sowie optional das Bindemittelgranulat 45, bevorzugt in einem Gewebeschlauch aufgenommen, erreichen und auswechseln zu können. Diese zusätzliche Absicherung verringert zwar deutlich den Niederschlagwassereintritt in die Auffangvorrichtung, vermeidet jedoch nicht, dass etwaig auftretendes Kondenswasser sowie durch Undichtigkeiten eindringendes Wasser gleichwohl in die Auffangvorrichtung gelangt und dort jedoch erfindungsgemäß durch die Bindemittel hindurchtreten und am unteren Ende der Auffangvorrichtung durch die Öffnungen 32 frei abtropfen kann.

### Bezugszeichenliste

- 1: Auffangvorrichtung
- 11: konische Wandung
- 12: Seitenwand
- 13: Halteelement

- 2: Manschette
- 21: Dichtmittel
- 22: Spannband

- 3: Auffangmittel
- 31: kreisringförmige Rinne
- 32: Öffnung

- 4: (Öl)-Bindemittel
- 40: Kassette
- 41: unteres Lochblech
- 42: Bindemittelmatte
- 43: oberes Lochblech
- 44: Handgriff
- 45: Bindemittelgranulat

- 5: Turm
- 51: Generatorgondel

- X: austretende Flüssigkeit

## Patentansprüche

1. Auffangvorrichtung (1) für an Türmen (5), Pfeilern oder dergleichen, insbesondere für Windkraftanlagen, abtropfenden, umweltschädlichen Flüssigkeiten, insbesondere Öl, wobei
- wenigstens eine vollständig um den Turm (5) umlaufende Manschette (2), die flüssigkeitsdicht am Turm (5) anschließt, und ein daran befestigtes Auffangmittel (3) vorgesehen sind,
- im Auffangmittel (3) Bindemittel (4) für umweltschädliche Flüssigkeiten, insbesondere Ölbindemittel, angeordnet ist und
- Öffnungen (32) unterhalb des Bindemittels (4) im Auffangmittel (3) zur Drainage von Niederschlagwasser vorgesehen sind,
**dadurch gekennzeichnet, dass** das Bindemittel (4) in Form von Bindemittelmatten (42) als in das Auffangmittel (3) einlegbare Kassetten (40) ausgebildet ist und die Kassette (40) ein standartisiertes Kreisringsegment ist mit einem unteren Lochblechabschnitt (41) unter der Bindemittelmatte (42) und einem oberen Lochblechabschnitt (43) über der Bindemittelmatte (42), wobei die Bindemittelmatte (42) Übermaß über die Lochblechabschnitte (41, 43) und Breite der umlaufenden kreisringförmigen Rinne (31) hat.

2. Auffangvorrichtung nach Anspruch 1, **dadurch gekennzeichnet, dass** das Auffangmittel (3) eine um den Turm (5) umlaufende kreisringförmige Rinne (31) ist.

3. Auffangvorrichtung nach Anspruch 1 oder 2, **dadurch gekennzeichnet, dass** das Bindemittel (4) in Form von Bindemittelgranulat als in das Auffangmittel eingegebene Schüttung (45) ausgebildet ist.

4. Auffangvorrichtung nach Anspruch 1, 2 oder 3, **dadurch gekennzeichnet, dass** die Lochblechabschnitte (41, 43) einer Kassette (40) miteinander verbunden sind und Handgriffe (44) am oberen Lochblechabschnitt (43) vorgesehen sind.

5. Auffangvorrichtung nach einem der vorangehenden Ansprüche,
**dadurch gekennzeichnet, dass** es aus mehreren, insbesondere zwei, kreissegmentförmigen Teilen besteht, die der Querschnittform des Turms (5) angepasst sind und allein durch umlaufende Verspannung (22) am Turm befestigt sind.

6. Auffangvorrichtung nach Anspruch 5, **dadurch gekennzeichnet, dass** bei einem Turm (5) für Windkraftanlagen mit Generatorgondel (51) die Auffangvorrichtung (1) direkt unterhalb der Generatorgondel (51) angeordnet ist.

7. Verfahren zum Auffangen von an Türmen (5), Pfeilern oder dergleichen, insbesondere Windkraftanlagen, abtropfenden umweltschädlichen Flüssigkeiten, insbesondere Öl, mit einer Auffangvorrichtung nach einem der Ansprüche 1 bis 6, wobei am Turm (5) abtropfende Flüssigkeiten, also Öl und Niederschlagwasser mit der Auffangvorrichtung (1) aufgefangen und zu Auffangmitteln (3) geleitet werden, wobei das Öl im Auffangmittel (3) gebunden wird, wohingegen das Niederschlagwasser unterhalb der Auffangmittel (3) durch Öffnungen (32) aus der Auffangvorrichtung (1) abtropfen kann, **dadurch gekennzeichnet, dass** nach einem Havariefall die in der Auffangvorrichtung (1) angeordneten Bindemittelkasetten (40) mit dem darin aufgenommenen Öl gewechselt werden.

## Claims

1. A collecting device (1) for environmentally harmful fluids, in particular oil, dripping down at towers (5), pillars or the like, in particular for wind power plants, wherein
- there are provided at least one collar (2), completely encircling the tower (5) and contiguous with the tower (5) in a fluid-tight manner, and a collecting means (3) secured thereto,
- a binder (4) for environmentally harmful fluids, in particular an oil binder, is arranged in the collecting means (3) and
- openings (32) are provided in the collecting means (3), below the binder (4), for the drainage of atmospheric water,
**characterized in that** the binder (4) is, in the form of binder mats (42), designed as cartridges (40) insertable into the collecting means (3) and the cartridge (40) is a standardized annulus segment with a lower perforated plate portion (41) below the binder mat (42) and an upper perforated plate portion (43) above the binder mat (42), wherein the binder mat (42) is larger than the perforated plate portions (41, 43) and than the width of the encircling, annulus-shaped channel (31).

2. A collecting device according to claim 1, **characterized in that** the collecting means (3) is an annulus-shaped channel (31) encircling the tower (5).

3. A collecting device according to claim 1 or 2, **characterized in that** the binder (4) is, in the form of granular binder material, feed material (45) fed into the collecting means.

4. A collecting device according to Claim 1, 2 or 3, **characterized in that** the perforated plate portions (41, 43) of a cartridge (40) are connected to one another and handles (44) are provided at the upper perforated plate portion (43).

5. A collecting device according to any one of the preceding claims, **characterized in that** it is composed of a plurality of parts, in particular two, in the shape of a segment of a circle, which are adapted to the cross-sectional form of the tower (5) and are secured to the tower solely by encircling clamping means (22).

6. A collecting device according to claim 5, **characterized in that** in the case of a tower (5), for wind power plants, with a generator gondola (51), the collecting device (1) is arranged directly below the generator gondola (51).

7. A method of collecting environmentally harmful fluids, in particular oil, dripping down at towers (5), pillars or the like, in particular wind power plants, with a collecting device according to any one of claims 1 to 6, wherein fluids, therefore oil and atmospheric water, dripping down at the tower (5) are collected with the collecting device (1) and conveyed to collecting means (3), wherein the oil is bound in the collecting means (3), whereas the atmospheric water can, below the collecting means (3), drip down out of the collecting device (1) through openings (32), **characterized in that** after an instance of sea damage, the binder cartridges (40) arranged in the collecting device (1) together with the oil taken up therein can be changed.

## Revendications

1. Dispositif de collecte (1) pour liquides polluants, notamment de l'huile, s'égouttant de tours (5), de piliers ou d'autres dispositifs similaires, notamment pour des éoliennes, dans lequel
- sont prévus au moins un manchon (2) entourant entièrement la tour (5) en étant raccordé à ladite tour (5) de façon étanche aux liquides et des moyens de collecte (3) fixés audit manchon,
- un liant (4) pour liquides polluants, en particulier un absorbant pour huile, est disposé dans les moyens de collecte (3), et
- des ouvertures (32) sont prévues dans les moyens de collecte (3) en dessous du liant (4) pour le drainage des eaux de pluie,
**caractérisé en ce que le** liant (4) sous la forme de matelas de liant (42) est conçu en tant que cassettes (40) pouvant être placées dans les moyens de collecte (3) et la cassette est un segment d'anneau circulaire standardisé avec une section de tôle perforée inférieure (41) située en dessous du matelas de liant (42) et une section de tôle perforée supérieure (43) située au-dessus du matelas de liant (42), le matelas de liant (42) étant surdimensionné par rapport aux sections de tôles perforées (41, 43) et à la largeur de la gouttière annulaire (31) faisant le tour.

2. Dispositif de collecte selon la revendication 1, **caractérisé en ce que** les moyens de collecte (3) sont une gouttière (31) annulaire faisant le tour de la tour (5).

3. Dispositif de collecte selon la revendication 1 ou 2, **caractérisé en ce que** le liant (4) sous la forme de granulat de liant est conçu sous forme de produit en vrac (45) versé dans les moyens de collecte.

4. Dispositif de collecte selon la revendication 1, 2 ou 3, **caractérisé en ce que** les sections de tôles perforées (41, 43) d'une cassette (40) sont reliées ensemble et des poignées (44) sont prévues sur la section de tôle perforée supérieure (43).

5. Dispositif de collecte selon l'une des revendications précédentes, **caractérisé en ce qu'**il est constitué de plusieurs pièces en segment de cercle, notamment de deux pièces, qui sont ajustées à la forme de la section transversale de la tour (5) et sont fixées à la tour uniquement par des liens de serrage (22) qui en font le tour.

6. Dispositif de collecte selon la revendication 5, **caractérisé en ce que** dans le cas d'une tour (5) pour éolienne avec une nacelle de générateur (51), le dispositif de collecte (1) est disposé directement en dessous de la nacelle de générateur (51).

7. Procédé pour collecter des liquides polluants, notamment de l'huile, s'écoulant de tours (5), de piliers ou d'autres dispositifs semblables, notamment d'éoliennes, avec un dispositif de collecte selon l'une des revendications 1 à 6, dans lequel les liquides s'écoulant de la tour (5), donc l'huile et les eaux de pluie, sont collectés avec le dispositif de collecte (1) et conduits aux moyens de collecte (3), l'huile étant liée dans les moyens de collecte (3) tandis que les eaux de pluie peuvent s'écouler hors du dispositif de collecte (1) en dessous des moyens de collecte (3) par des ouvertures (32), **caractérisé en ce que,** après une avarie, les cassettes de liant (40) disposées dans le dispositif de collecte (1) et contenant l'huile recueillie sont échangées.
